# EUROPÄISCHE PATENTSCHRIFT

(11) **EP 1 291 122 B1**
(45) Veröffentlichungstag und Bekanntmachung des Hinweises auf die Patenterteilung: **08.10.2008**
(21) Anmeldenummer: 02017821.6
(22) Anmeldetag: 08.08.2002
(51) Int. Cl.: B23Q 1/01, B23Q 7/03, B23Q 3/157

(54) **Fräs- und Bohrbearbeitungszentrum**
Machining centre for milling and drilling
Centre d'usinage pour fraisage et forage

(30) Priorität: 11.09.2001 DE 10144678
(43) Veröffentlichungstag der Anmeldung: 12.03.2003
(73) Patentinhaber: EMAG Holding GmbH, 73084 Salach (DE)
(72) Erfinder: Popp, Konrad Joseph, 86199 Augsburg (DE); Merk, Robert, 86862 Lamerdingen (DE)
(74) Vertreter: Schwarz, Thomas

(56) Entgegenhaltungen:
- WO-A-96/00633
- FR-A- 2 795 983
- US-A- 5 944 643

## Beschreibung

Die Erfindung betrifft ein Fräs- und Bohrbearbeitungszentrum nach dem Oberbegriff des Anspruchs 1.

Herkömmliche Fräs- und Bohrbearbeitungszentren sind in der Regel in einer Konsol-, Bett- oder Bohrwerksbauweise aufgebaut. Das die rotatorische Hauptschnittbewegung durchführende Werkzeug ist in einer drehangetriebenen Arbeitsspindel aufgenommen, die in einem zum Werkstück relativ verfahrbaren Spindelgehäuse gelagert ist. Die zu bearbeitenden Werkstücke sind üblicherweise auf Kreuztischen, Wechseltischen, Drehtischen oder auf Paletten gespannt. In der Regel weisen derartige Bearbeitungszentren auch automatische Werkzeugwechseleinrichtungen auf, durch die ein schneller und automatisierter Wechsel der für die unterschiedlichen Bearbeitungsoperationen benötigten Werkzeuge ermöglicht wird. Dadurch kann eine automatische Komplettbearbeitung eines Werkstücks ohne manuelle Eingriffe in einer Aufspannung durchgeführt werden. Eine weitere Erhöhung des Automatisierungsgrads und eine Verkürzung der unproduktiven Nebenzeiten kann durch zusätzliche automatische Werkstückwechseleinrichtungen erreicht werden. Hierzu kommen überwiegend Palettenwechselsysteme zur Anwendung, die einen in der Vertikalachse verfahrbaren und um die Vertikalachse drehbaren Palettenträger zum Austausch einer im Arbeitsraum angeordneten Palette gegen eine in einer Rüststellung befindliche Palette aufweisen. Während sich eine der Paletten im Arbeitsraum befindet, kann auf der in der Rüststellung befindlichen anderen Palette ein fertig bearbeitetes Werkstück entnommen und ein neues Werkstück aufgespannt werden. Derartige Palettenwechsler sind jedoch technisch aufwendig, da hierfür besondere Zusatzeinrichtungen mit entsprechenden Führungen, gesonderten Antriebssystemen und zugehörigen Steuereinrichtungen erforderlich sind. Dies ist mit einem entsprechend hohen Investitionsaufwand verbunden. Außerdem benötigt ein mit Palettenwechselsystem ausgestattetes Bearbeitungszentrum einen erhöhten Platzbedarf.

Aus der WO 96/00633 A1 ist ein gattungsgemäßes Bearbeitungszentrum bekannt, das ein Maschinenbett und ein von diesem nach oben ragendes Ständerteil enthält. An dem Ständerteil ist ein Werkstückträger angeordnet, der eine über einen Kreuzschlitten horizontal und vertikal verfahrbare Werkstückspannvorrichtung enthält. Diese ist zum automatischen Werkstückwechsel zwischen einer seitlich der Arbeitsspindel angeordneten Werkstück-Fördereinrichtung und einem Arbeitsbereich vor der Arbeitsspindel bewegbar. Die Arbeitsspindel ist bei diesem bekannten Bearbeitungszentrum in einem Spindelgehäuse untergebracht, das über eine Horizontalführung verfahrbar auf der Oberseite des Maschinenbetts angeordnet ist.

Aufgabe der Erfindung ist es, ein kompakt aufgebautes und kostengünstiges Fräs- und Bohrbearbeitungszentrum mit verbessertem Kraftfluß zu schaffen, das einen hohen Automatisierungsgrad mit automatischem Werkstückwechsel ermöglicht.

Diese Aufgabe wird durch ein Fräs- und Bohrbearbeitungszentrum mit den Merkmalen des Anspruchs 1 gelöst.

Ein wesentlicher Vorteil des erfindungsgemäßen Fräs- und Bohrbearbeitungszentrums besteht darin, daß sowohl die Arbeitsspindel als auch die in mehreren Achsen bewegliche Werkstückspannvorrichtung an einem in Monoblock-Bauweise ausgeführten gemeinsamen Ständerteil angeordnet sind. Dadurch wird ein günstiger Kraftfluß und eine hohe Steifigkeit erreicht. Der über den Kreuzschlitten an dem oberen ortsfesten Ständerteil angeordnete Werkstückträger führt nicht nur die für die Bearbeitung eines Werkstücks erforderlichen Linearbewegungen in der X- und Y-Achse aus, sondern übernimmt auch die Verfahrbewegungen zur Durchführung eines automatischen Werkstückwechsels. Durch einfache Verfahrbewegungen des Kreuzschlittens kann so ein automatischer Werkstückwechsel auf einfache Weise durchgeführt werden. Es sind keine gesonderten Handhabungssysteme oder aufwendige Palettenwechseleinrichtungen erforderlich. Durch die hängende Anordnung des Werkstücks am Werkstückträger kann ein besonders schneller Werkstückwechsel im Pick-up-Verfahren erfolgen. Es sind nur vergleichsweise kurze Verfahrbewegungen erforderlich, um ein fertig bearbeitetes Werkstück auf einer z.B. als Transportband ausgeführten Werkstückbereitstellungseinrichtung abzulegen und von dort ein neues Werkstück in den Arbeitsbereich zu transportieren. Dadurch können die Span-zu-Span-Zeiten reduziert werden.

Ein weiterer Vorteil des erfindungsgemäßen Maschinenkonzepts liegt in der guten Späneabfuhr. Durch die hängende Halterung der Werkstücke können die Bearbeitungsspäne frei nach unten z.B. durch eine im Untergestell vorgesehene Öffnung fallen. Dadurch kann der Arbeitsbereich frei von störenden Bearbeitungsspänen gehalten werden.

Zweckmäßige Ausgestaltungen und vorteilhafte Weiterbildungen der Erfindung sind in den Unteransprüchen angegeben.

So enthält der Werkstückträger in einer besonders zweckmäßigen Ausführung einen Werkstückaufnahmekopf, in dem die Werkstückspannvorrichtung um ihre Mittelachse (B-Achse) motorisch drehbar angeordnet ist. Der Werkstückaufnahmekopf ist seinerseits in einer Winkelhalterung um eine zur zweiten Horizontalachse (X-Achse) parallele Drehachse (A-Achse) drehbar angeordnet. Durch die beiden zusätzlichen Drehachsen in Verbindung mit den über den Kreuzschlitten durchgeführten Linearbewegungen in der X- und Y-Achse sowie einer Linearbewegung der Arbeitsspindel in der Z-Achse kann so eine 5-Seiten-Bearbeitung durchgeführt werden.

Die Werkstückbereitstellungseinrichtung ist bei einer zweckmäßigen Ausgestaltung ein in Art eines Endlosbands horizontal umlaufendes Transportband, das zwei separate Transportbahnen enthält. Ein derartiges Transportband kann mit einer Vielzahl von Werkstücken bestückt werden, die dann in eine in der Nähe der Arbeitsspindel befindliche Übergabeposition zur Entnahme durch den Werkstückträger verfahren werden können. Der Transport der noch zu bearbeitenden Werkstücke in die vorgegebene Übergabeposition oder der Abtransport der bereits fertig bearbeiteten Werkstücke in eine vorbestimmte Entnahmestellung kann so während der Bearbeitung erfolgen.

Unterhalb des Spindelgehäuses ist ein z.B. als Teller- oder Scheibenmagazin ausgeführtes Werkzeugmagazin angeordnet. Mit einem am Spindelgehäuse montierten Werkzeugwechsler in einer Doppelgreiferausführung kann so auch ein schneller automatischer Werkzeugwechsel durchgeführt werden.

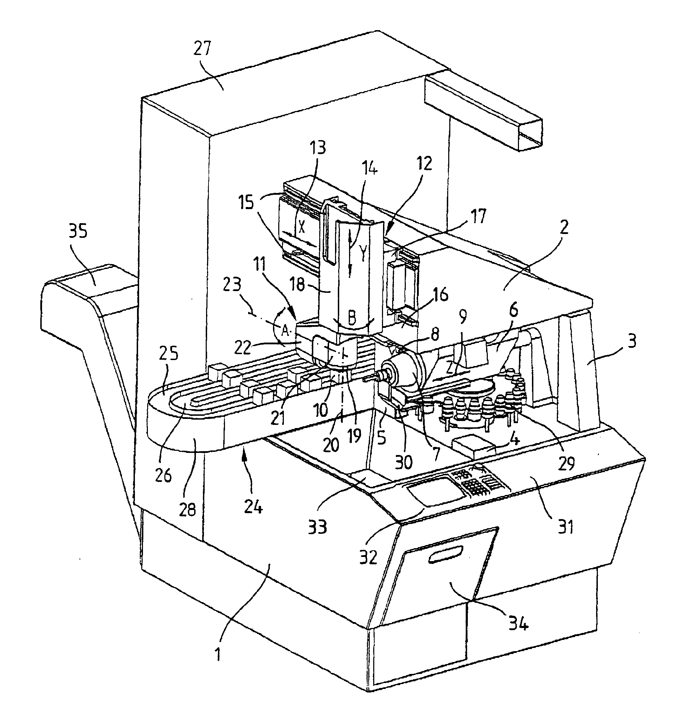

Weitere Besonderheiten und Vorzüge der Erfindung ergeben sich aus der folgenden Beschreibung eines bevorzugten Ausführungsbeispiels anhand der Zeichnung, die den Grundaufbau eines erfindungsgemäßen Bohr- und Fräsbearbeitungszentrums in einer schematischen Perspektive zeigt.

Das in der Zeichnung dargestellte Fräs- und Bohrbearbeitungszentrum enthält einen Maschinenständer mit einem Untergestell 1 und einem in Monoblock-Bauweise ausgeführten oberen ortsfesten Ständerteil 2, der auf zwei voneinander beabstandeten seitlichen Stützen 3 und 4 sowie einer durchgängigen dritten Stütze 5 angeordnet ist. Zur besseren Erkennbarkeit des Maschinenaufbaus ist die in der Zeichnung linke seitliche Stütze 4 bei der gezeigten Darstellung abgeschnitten. Sie ist jedoch wie die auf der rechten Seite dargestellte Stütze 3 aufgebaut. An der Unterseite des Ständerteils 2 ist zwischen den Stützen 3, 4 und 5 ein Spindelgehäuse 6 mit einer darin drehgelagerten, motorisch angetriebenen horizontalen Arbeitsspindel 7 hängend angeordnet. Das Spindelgehäuse 6 mit der darin angeordneten Arbeitsspindel 7 ist über parallele Führungsschienen 8 an der Unterseite des Ständerteils 2 verschiebbar geführt und durch einen nicht dargestellten Antrieb in einer ersten Horizontalachse 9 (Z-Achse) verfahrbar.

Das zu bearbeitende Werkstück 10 wird von einem Werkstückträger 11 gehalten, der über einen Kreuzschlitten 12 in einer zur ersten Horizontalachse 9 (Z-Achse) senkrechten zweiten Horizontalachse 13 (X-Achse) und einer dazu senkrechten Vertikalachse 14 (Y-Achse) verfahrbar am ortsfesten Ständerteil 2 angeordnet ist. Der Kreuzschlitten 12 besteht aus einem über horizontale Führungsschienen 15 an einer Stirnfläche 16 des Ständerteils 2 in der X-Achse motorisch verfahrbaren Querschlitten 17, der einen in der Y-Achse motorisch verfahrbaren Vertikalschlitten 18 trägt. Durch entsprechende Verfahrbewegungen des Querschlittens 17 und des Vertikalschlittens 18 werden so die für die Bearbeitung erforderlichen Linearbewegungen in der X- und Y-Achse durchgeführt, während die Linearbewegung in der Z-Achse durch gesteuerte Positionierung des Spindelgehäuses 6 erfolgt.

Der an der Unterseite des Vertikalschlittens 18 angeordnete Werkstückträger 11 enthält eine automatisch betätigbare Werkstückspannvorrichtung 19, die z.B. in Form eines mit Spannbacken versehenen Spannfutters oder dgl. ausgeführt ist. Bei der in der Zeichnung dargestellten Ausführung ist die als Spannfutter ausgebildete Werkstückspannvorrichtung 19 über einen geeigneten Antrieb um ihre Mittelachse 20 (B-Achse) drehbar in einem Werkzeugaufnahmekopf 21 angeordnet. Der Werkstückaufnahmekopf 21 ist an einer an der Unterseite des Vertikalschlittens befestigten Winkelhalterung 22 um eine zur X-Achse parallele Drehachse 23 (A-Achse) über einen Antrieb motorisch verdrehbar angeordnet. Die Drehung der Werkstückspannvorrichtung 19 und des Werkstückaufnahmekopfs 21 kann z.B. über Harmonic-Drive-Antriebe erfolgen, die in die Winkelhalterung 22 bzw. den Werkstückufnahmekopf integriert sind. Durch die beiden zusätzlichen Drehachsen 20 und 23 wird eine 5-Seiten-Bearbeitung in einer Aufspannung ermöglicht.

Der in Monoblock-Bauweise ausgeführte obere Ständerteil 2 ist derart ausgebildet, daß sich die den Querschlitten tragende Stirnfläche 16 über ein auf dem Untergestell 1 zur Arbeitsspindel seitlich versetzt angeordnete Werkstückbereitstellungseinrichtung 24 erstreckt und diese zumindest teilweise überspannt. Dadurch kann der Werkstückträger 11 durch einfache Verfahrbewegungen des Querschlittens 17 und des Vertikalschlittens 18 über die Werkstückbereitstellungseinrichtung 24 verfahren werden, um dort ein fertig bearbeitetes Werkstück abzulegen und das nächste zu bearbeitende Werkstück abzuholen. Bei der in der Zeichnung dargestellten Ausführung ist die Werkstückbereitstellungseinrichtung 24 ein als Endlosband ausgeführtes und mit zwei separaten Transportbahnen 25 und 26 ausgestattetes umlaufendes Transportband, das auf dem Untergestell 1 zwischen der durchgehenden Stütze 5 und einem Schaltschrank 27 angeordnet ist. Das Transportband kann mit einer Vielzahl von Werkstücken bestückt werden, die dann nach einem vorgegebenen Programmablauf automatisch in eine vorbestimmte Übergabestellung zur Entnahme durch den Werkzeughalter verfahren werden. Nach erfolgter Bearbeitung werden die über den Werkzeughalter wieder auf das Transportband abgelegten fertigen Werkstücke vom Transportband zu einer Entnahmestelle transportiert. Das Transportband weist einen über das Untergestell 1 seitlich auskragenden Be- bzw. Entladebereich 28 auf, der durch eine entsprechende Öffnung einer nicht dargestellten Schutzkabine nach außen ragt. In diesem Bereich kann das Transportband mit neuen Werkstücken bestückt werden und bereits bearbeitete Werkstücke können dort auch vom Transportband entnommen werden.

Unterhalb des Spindelgehäuses 6 ist auf dem Untergestell 1 ein als Tellermagazin ausgeführtes Werkzeugmagazin 29 ortsfest montiert. Der zum Werkzeugwechsel erforderliche Transport der Bearbeitungswerkzeuge zwischen der Arbeitsspindel 7 und dem Werkzeugmagazin 29 erfolgt durch einen am Spindelgehäuse 6 im Bereich des Spindelkopfs angeordneten Werkzeugwechsler 30, der als Doppelgreifer ausgeführt ist und zwei um 90° zueinander versetzte Werkzeuggreifer enthält. Durch Drehung des Werkzeugwechslers 30 um eine unter 45° gegenüber der horizontalen Mittelachse der Arbeitsspindel nach unten geneigte Drehachse und entsprechende Verfahrbewegungen des Spindelgehäuses und eine Verschiebung des Werkzeuggreifers relativ zum Spindelgehäuse kann so ein automatischer Werkzeugwechsel durchgeführt werden. Durch den zwischen den einzelnen Stützen 3 und 4 gebildeten Durchgang kann das Werkzeugmagazin 29 mit den für die Bearbeitung benötigten Werkzeugen bestückt werden.

An dem Untergestell 1 ist eine Bedienkonsole 31 mit einem eingebauten Bedienpult 32 angeordnet. In dem Untergestell 1 ist außerdem eine unterhalb des Spindelkopfs der Arbeitsspindel 7 liegende Öffnung 33 vorgesehen, durch welche die bei der Bearbeitung anfallenden Späne nach unten fallen können. Dadurch wird der Arbeitsbereich frei von Spänen gehalten. Die nach unten fallenden Späne können durch eine Schublade 34 aufgefangen und/oder durch einen automatischen Späneförderer 35 abtransportiert werden.

## Patentansprüche

1. Fräs- und Bohrbearbeitungszentrum mit einem Maschinenständer (1, 2), der ein Untergestell (1) und einen oberen ortsfesten Ständerteil (2) enthält, einem am Maschinenständer (1, 2) in einer ersten Horizontalachse (9) motorisch verfahrbar angeordneten Spindelgehäuse (6) mit einer horizontalen Arbeitsspindel (7) und einem Werkstückträger (11) mit einer automatisch betätigbaren Werkstückspannvorrichtung (19), die über einen Kreuzschlitten (12) in einer zur ersten Horizontalachse (9) senkrechten zweiten Horizontalachse (13) und einer dazu senkrechten Vertikalachse (14) verfahrbar am oberen Ständerteil (2) hängend angeordnet und zum automatischen Werkstückwechsel zwischen einer seitlich der Arbeitsspindel (7) angeordneten Werkstückbereitstellungseinrichtung (24) und einem Arbeitsbereich vor der Arbeitsspindel (7) bewegbar ist, **dadurch gekennzeichnet, daß** der auf Stützen (3, 4, 5) angeordnete obere Ständerteil (2) in einer Monoblock-Bauweise ausgeführt ist und daß das Spindelgehäuse (6) mit der horizontalen Arbeitsspindel (7) an der Unterseite des ortsfesten Ständerteils (2) des Maschinenständers (1, 2) hängend angeordnet ist.

2. Fräs- und Bohrbearbeitungszentrum nach Anspruch 1, **dadurch gekennzeichnet, daß** der obere Ständerteil (2) eine die Werkstückbereitstellungseinrichtung (24) zumindest teilweise überspannende Stirnfläche (16) aufweist, an der ein Querschlitten (17) des Kreuzschlittens (12) über horizontale Führungsschienen (15) in der zweiten Horizontalachse (13) verfahrbar angeordnet ist.

3. Fräs- und Bohrbearbeitungszentrum nach Anspruch 2, **dadurch gekennzeichnet, daß** der Kreuzschlitten (12) einen am Querschlitten (17) in der Vertikalachse (14) verfahrbaren Vertikalschlitten (18) enthält, an dessen Unterseite der Werkstückträger (11) angeordnet ist.

4. Fräs- und Bohrbearbeitungszentrum nach Anspruch 1, **dadurch gekennzeichnet, daß** der Werkstückträger (11) einen Werkstückaufnahmekopf (21) enthält, in dem die Werkstückspannvorrichtung (19) um ihre Mittelachse (B-Achse) motorisch drehbar angeordnet ist.

5. Fräs- und Bohrbearbeitungszentrum nach Anspruch 2, **dadurch gekennzeichnet, daß** der Werkstückträger (11) eine Winkelhalterung (22) enthält, an der der Werkstückaufnahmekopf (21) um eine zur zweiten Horizontalachse (X-Achse) parallele Drehachse (A-Achse) motorisch verdrehbar angeordnet ist.

6. Fräs- und Bohrbearbeitungszentrum nach einem der Ansprüche 1 bis 5, **dadurch gekennzeichnet, daß** die Werkstückbereitstellungseinrichtung (24) ein als Endlosband umlaufendes horizontales Transportband mit mindestens einer Transportbahn (25, 26) ist.

7. Fräs- und Bohrbearbeitungszentrum nach einem der Ansprüche 1 bis 6, **dadurch gekennzeichnet, daß** unterhalb des Spindelgehäuses (6) ein Werkzeugmagazin (29) auf einem Untergestell (2) des Maschinenständers (1, 2) angeordnet ist.

8. Fräs- und Bohrbearbeitungszentrum nach Anspruch 7, **dadurch gekennzeichnet, daß** an dem Spindelgehäuse (6) eine Werkzeugwechseleinrichtung (30) zum automatischen Werkzeugtransport zwischen der Arbeitsspindel (7) und dem Werkzeugmagazin (29) angeordnet ist.

9. Fräs- und Bohrbearbeitungszentrum nach Anspruch 8, **dadurch gekennzeichnet, daß** die Werkzeugwechseleinrichtung (30) ein als Doppelgreifer ausgeführter Werkzeugwechsler ist.

## Claims

1. Machining centre for milling and drilling with a machine column (1, 2) which comprises a base frame (1) and an upper fixed column part (2), with a spindle housing (6) arranged on the machine column (1, 2) so as to be displaceable by motor in a first horizontal axis (9) and having a horizontal work spindle (7), and a workpiece carrier (11) with an automatically actuatable workpiece fixture (19) which is arranged suspended from the upper column part (2) so as to be displaceable by means of a cross slide (12) in a second horizontal axis (13) perpendicular to the first horizontal axis (9) and in a vertical axis (14) perpendicular thereto and is moveable between a workpiece delivery device (24) arranged to the side of the work spindle (7) and a working area in front of the work spindle (7) for automatic changing of workpieces, **characterised in that** the upper column part (2) arranged on supports (3, 4, 5) is of monobloc design and **in that** the spindle housing (6) with the horizontal work spindle (7) is arranged suspended from the underside of the fixed column part (2) of the machine column (1, 2).

2. Machining centre for milling and drilling according to claim 1, **characterised in that** the upper column part (2) exhibits an end face (16) which at least partly spans the workpiece delivery device (24) and on which a transverse slide (17) of the cross slide (12) is arranged so as to be displaceable in the second horizontal axis (13) by means of horizontal guide rails (15).

3. Machining centre for milling and drilling according to claim 2, **characterised in that** the cross slide (12) comprises a vertical slide (18) which is displaceable in the vertical axis (14) on the transverse slide (17) and on the underside of which is arranged the workpiece carrier (11).

4. Machining centre for milling and drilling according to claim 1, **characterised in that** the workpiece carrier (11) comprises a workpiece receiving head (21) in which the workpiece fixture (19) is arranged so as to be rotatable by motor about its central axis (B axis).

5. Machining centre for milling and drilling according to claim 2, **characterised in that** the workpiece carrier (11) comprises an angle mounting (22) on which the workpiece receiving head (21) is arranged so as to be pivotable by motor about a pivot axis (A axis) parallel to the second horizontal axis (X axis).

6. Machining centre for milling and drilling according to one of claims 1 to 5, **characterised in that** the workpiece delivery device (24) is a horizontal conveyor belt circulating as an endless belt with at least one conveyor track (25, 26).

7. Machining centre for milling and drilling according to one of claims 1 to 6, **characterised in that** underneath the spindle housing (6) there is a tool magazine (29) arranged on a base frame (2) of the machine column (1, 2).

8. Machining centre for milling and drilling according to claim 7, **characterised in that** a tool changing device (30) for automatic tool conveyance between the work spindle (7) and the tool magazine (29) is arranged on the spindle housing (6).

9. Machining centre for milling and drilling according to claim 8, **characterised in that** the tool changing device (30) is a tool changer embodied as a double gripper.

## Revendications

1. Centre d'usinage pour fraisage et perçage avec un bâti de machine (1, 2), qui contient une base (1) et un élément de bâti (2) fixe supérieur, avec un boîtier de broche (6) agencé de façon déplaçable par moteur au niveau du bâti de machine (1, 2) suivant un premier axe horizontal (9) et comportant une broche de travail (7) horizontale et avec un porte-pièce (11) avec un dispositif de serrage de pièce (19) à actionnement automatique, qui est agencé de manière suspendue au niveau de l'élément de bâti (2) supérieur de façon déplaçable par le biais d'un chariot ou coulisseau en croix (12) suivant un deuxième axe horizontal (13) perpendiculaire au premier axe horizontal (9) et un axe vertical (14) perpendiculaire à celui-ci et qui peut être déplacé pour le changement automatique de pièce entre un dispositif de mise à disposition de pièce (24) agencé sur le côté de la broche de travail (7) et une zone de travail devant la broche de travail (7), **caractérisé en ce que** l'élément de bâti (2) supérieur agencé sur des appuis (3, 4, 5) est de construction monobloc et **en ce que** le boîtier de broche (6) avec la broche de travail (7) horizontale est agencé de manière suspendue sur le côté inférieur de l'élément de bâti (2) fixe du bâti de machine (1, 2).

2. Centre d'usinage pour fraisage et perçage selon la revendication 1, **caractérisé en ce que** l'élément de bâti (2) supérieur présente une surface frontale (16) couvrant au moins partiellement le dispositif de mise à disposition de pièce (24), au niveau de laquelle un coulisseau transversal (17) du coulisseau en croix (12) est agencé de manière déplaçable suivant le deuxième axe horizontal (13) par le biais de rails de guidage horizontaux (15).

3. Centre d'usinage pour fraisage et perçage selon la revendication 2, **caractérisé en ce que** le coulisseau en croix (12) contient un coulisseau vertical (18) déplaçable au niveau du coulisseau transversal (17) suivant l'axe vertical (14), au niveau du côté inférieur duquel coulisseau vertical est agencé le porte-pièce (11).

4. Centre d'usinage pour fraisage et perçage selon la revendication 1, **caractérisé en ce que** le porte-pièce (11) contient une tête de réception de pièce (21), dans laquelle le dispositif de serrage de pièce (19) est agencé de manière rotative par moteur autour de son axe médian (axe B).

5. Centre d'usinage pour fraisage et perçage selon la revendication 2, **caractérisé en ce que** le porte-pièce (11) contient un support en équerre (22), au niveau duquel la tête de réception de pièce (21) est agencée de manière rotative par moteur autour d'un axe de rotation (axe A) parallèle au deuxième axe horizontal (axe X).

6. Centre d'usinage pour fraisage et perçage selon l'une quelconque des revendications 1 à 5, **caractérisé en ce que** le dispositif de mise à disposition de pièce (24) est une bande transporteuse horizontale circulaire sous forme de bande sans fin avec au moins une voie de transport (25, 26).

7. Centre d'usinage pour fraisage et perçage selon l'une quelconque des revendications 1 à 6, **caractérisé en ce que** sous le boîtier de broche (6), un magasin d'outils (29) est agencé sur une base (2) du bâti de machine (1, 2).

8. Centre d'usinage pour fraisage et perçage selon la revendication 7, **caractérisé en ce qu'**un dispositif de mise à disposition de pièce (30) est agencé au niveau du boîtier de broche (6) pour le transport automatique d'outils entre la broche de travail (7) et le magasin d'outils (29).

9. Centre d'usinage pour fraisage et perçage selon la revendication 8, **caractérisé en ce que** le dispositif de changement d'outil (30) est un changeur d'outil réalisé sous forme de pince double.
